# EUROPÄISCHE PATENTSCHRIFT

(11) **EP 1 101 595 B1**
(45) Veröffentlichungstag und Bekanntmachung des Hinweises auf die Patenterteilung: **04.09.2002**
(21) Anmeldenummer: 00124586.9
(22) Anmeldetag: 10.11.2000
(51) Int. Cl.: B29C 51/32, B29C 33/30, B29C 51/42

(54) **Thermoformmaschine mit Verrastungen zwischen den Formeinsätzen und der Grundlage der Maschine**
Thermoforming apparatus with formations between the tool insert parts and the foundation of the apparatus
Appareil de thermoformage avec des formations entre les insertions d'outil et la base de l'appareil

(30) Priorität: 16.11.1999 DE 19955011
(43) Veröffentlichungstag der Anmeldung: 23.05.2001
(73) Patentinhaber: Adolf Illig Maschinenbau GmbH & Co. KG, 74081 Heilbronn (DE)
(72) Erfinder: Trautwein, Herbert, 71737 Kirchberg (DE); Heidrich, Klaus-Peter, 74072 Heilbronn (DE)

(56) Entgegenhaltungen:
- EP-A- 0 914 931
- DE-U- 29 814 480
- PATENT ABSTRACTS OF JAPAN vol. 006, no. 213 (M-167), 26. Oktober 1982 (1982-10-26) -& JP 57 117919 A (MATSUSHITA DENKO KK), 22. Juli 1982 (1982-07-22)

## Beschreibung

Die Erfindung betrifft ein Formwerkzeug zum Herstellen von Behältern aus einer erwärmten thermoplastischen Kunststofffolie durch Tiefziehen. Es besteht aus einem Oberteil und einem Unterteil, wobei beide relativ zueinander verschiebbar sind. Das Unterteil weist dabei die eigentlichen Formen für die Behälter auf, die in einen Schnittblock eingesetzt sind, das Oberteil eine Druckluftzuführung, eine Matrize und Niederhalter. Ein solches Formwerkzeug wird in die Formstation einer Thermoformmaschine eingebaut.

Aus der DE 298 14 480 U1 ist ein gattungsbildendes Formwerkzeug zur Herstellung von Behältern mit u-förmigem Rand bekannt. Um die bei der Herstellung eines u-förmigen Behälterrandes auf den Formeinsatz durch das Formen und Ausstanzen einwirkende Kraft abzufangen und eine Deformierung und Beschädigung zu vermeiden wird vorgeschlagen, die Oberkante des Schnittblockes mit einem Vorsprung zu versehen. Der u-förmige Bereich des Formeinsatzes weist eine entsprechende Nut auf, die formschlüssig in diesen Vorsprung eingreift.
Durch diesen Vorsprung wird das Nachschleifen des Schnittblockes an der Oberfläche sehr erschwert, weil der Vorsprung umschliffen und an der Oberkante nachgesetzt werden muss. Es ist also ein hoher Zeitaufwand erforderlich, da in der Regel mehrere Formeinsätze, oft mehrreihig, in einen Schnittblock eingesetzt sind. Um alle Vorsprünge muss ringsum geschliffen werden.
Die bekannte Art der Verrastung ist bei Behältern mit Flachrand nicht anwendbar, da dort der Formeinsatz bündig in die Bohrung des Schnittblockes eingesetzt ist. Diese Verrastung ist außerdem bei einem Abfangen der durch Kühlwasser zwischen Formeinsatz und Bohrung entstehenden Kräfte ungeeignet, da ein zu großer Abstand zwischen Entstehungsort und Verrastung besteht. Der im Querschnitt recht dünne, in der Regel aus Aluminium bestehende Formeinsatz würde sich nach innen wölben und es bestünde die Gefahr einer Leckage von Kühlwasser.

Der Erfindung liegt die Aufgabe zugrunde, die Verrastung des Formeinsatzes mit dem Schnittblock so auszubilden, dass sie auch bei Formwerkzeugen für Behälter mit Flachrand Anwendung finden kann und das Nachschleifen der Stanzkante des Schnittblockes auf einfache Weise möglich ist. Es sollte eine Verrastung in der Nähe der durch den Druck des Kühlwassers entstehenden Kräfte erfolgen, um eine Deformation des Formeinsatzes zwischen Entstehungsort und Verrastung möglichst gering zu halten.

Zur Lösung der Aufgabe werden die kennzeichnenden Merkmale des Hauptanspruches vorgeschlagen. Eine besondere Ausbildung der Verrastung ist im Anspruch 2 beschrieben.

Ein Ausführungsbeispiel und vorteilhafte Weiterbildungen des Formwerkzeuges sind an Hand der schematischen Zeichnungen näher beschrieben. Es zeigen:
- Figur 1: einen Querschnitt durch das gesamte Formwerkzeug
- Figur 2: eine Draufsicht auf einen Teil des Unterteils

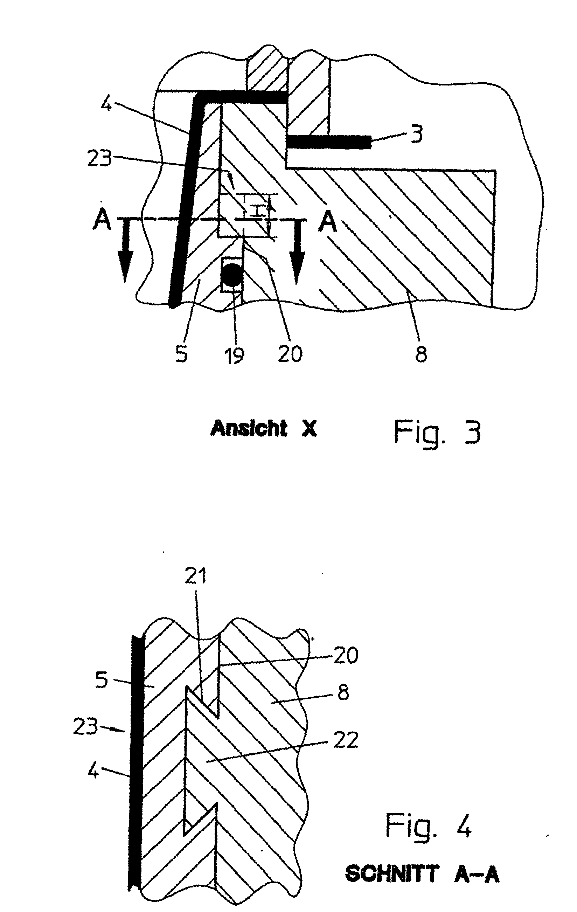

- Figur 3: eine vergrößerte Darstellung des Bereiches "X" in Figur 1
- Figur 4: einen Schnitt entlang der Linie A-A in Figur 3

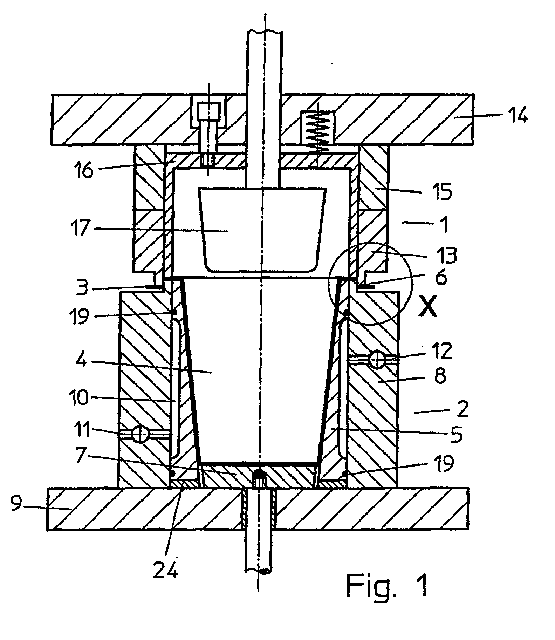

Das kombiniert formende und stanzende Formwerkzeug gemäß Figur 1 besteht aus einem Oberteil 1 und einem Unterteil 2, die relativ zueinander verschiebbar sind und im Zusammenwirken eine Folie 3 zu Behältern 4 in bekannter Weise mittels Druckluft verformen und diese anschließend ausstanzen. Hierzu weist das Unterteil 2 pro Formnest einen Formeinsatz 5 auf, der in einem Schnittblock 8 sitzt, der pro Formnest eine Schnittkante 6 aufweist. In jedem Formeinsatz 5 sitzt ein höhenverschiebbarer Formboden 7. Der Schnittblock 8 ist auf einer Grundplatte 9 befestigt. Zwischen der äußeren Wandung der einzelnen Formeinsätze 5 und dem Schnittblock 8 ist je eine Kühlkammer 10 zur Kühlung der geformten Behälter 4 vorgesehen, die mit einer Wasserzuführung 11 und einer Wasserableitung 12 verbunden ist. Dichtungen 19 verhindern den Austritt von Kühlwasser.

Das Oberteil 1 setzt sich zusammen aus der Matrize 13, der Kopfplatte 14 und der Zwischenplatte 15, sowie einem Niederhalter 16 und einem Streckhelfer 17 pro Formnest. Über einen nicht dargestellten Anschluss wird taktweise Druckluft ins Innere des Oberteils 1 geführt.

Das Formwerkzeug weist wie dargestellt eine oder mehrere Reihen von Formnestem auf, wobei jede Reihe mehrere Formnester beinhaltet. Oberteil 1 und Unterteil 2 sind über nicht dargestellte Führungen zueinander geführt und werden in die Formstation einer taktweise arbeitenden Thermoformmaschine eingebaut.

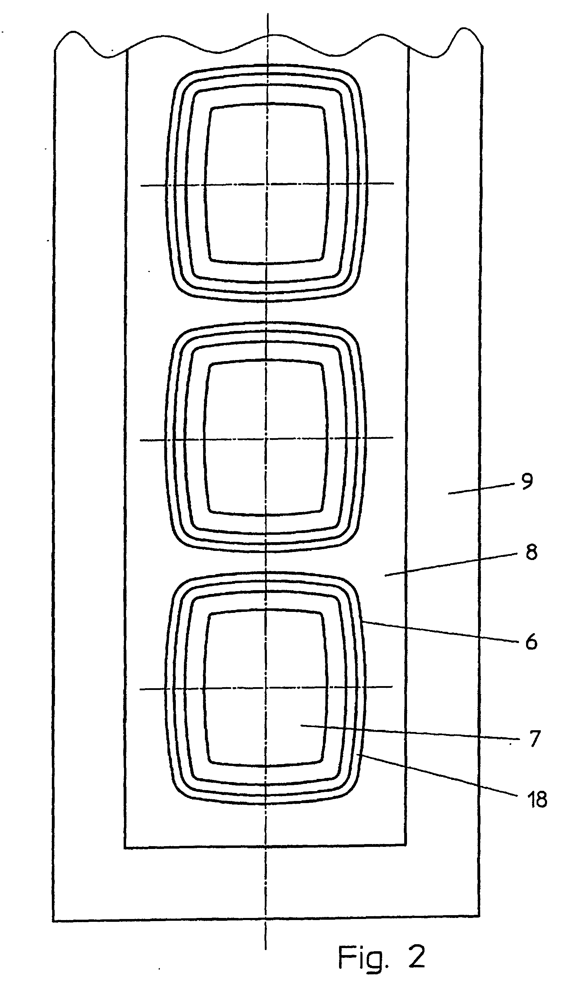

Figur 2 zeigt eine teilweise Draufsicht auf ein einreihiges Formwerkzeug zum Herstellen von Behältern 4 mit ovaler Form. Durch den Druckaufbau des Kühlwassers in den Kühlkammern 10 neigen die Längsseiten 18 der Formeinsätze 5 zur Verformung nach innen und dadurch besteht die Gefahr der Leckage von Kühlwasser über die Dichtungen 19 hinweg. Diese Verformung führt zudem zu einer Formabweichung der geformten Behälter 4.
Um dieser Verformung entgegenzuwirken bzw. um diese zu verhindern werden Formeinsätze 5 und die Durchbrüche 20 zur Aufnahme der Formeinsätze 5 so gestaltet, dass in montiertem Zustand eine formschlüssige Verrastung beider Teile über Verrastungselemente 23 gegeben ist. Die Verrastung erfolgt vorzugsweise über eine schwalbenschwanzförmige Gestaltung der Verrastungselemente 23. Hierzu wird die äußere Wandung der Formeinsätze 5 mit einer Nut 21 mit der Höhe H in Form eines Schwalbenschwanzes versehen. Die Durchbrüche 20 im Schnittblock 8 weisen an der Innenseite an der entsprechenden Stelle einen Schwalbenschwanz 22 auf, wobei Nut 21 und Schwalbenschwanz 22 gleiche Form aufweisen. Beim Einschieben der Formeinsätze 5 von der Seite der Grundplatte 8 aus verrastet der Schwalbenschwanz 22 in der Nut 21 und diese Verrastung verhindert eine Verformung der Formeinsätze 5 in diesem Bereich.
Je nach Größe und Form der herzustellenden Behälter 4 ist es erforderlich, eine oder mehrere dieser Verrastungselemente 23 pro Längsseite 18 vorzusehen, oder zusätzlich auch an den quer verlaufenden Seiten. Andere Formen als Schwalbenschwanzverbindungen sind denkbar, z. B. in Form von T-Nuten, scheitern jedoch meist wegen den beengten Platzverhältnissen. Auch ist es in umgekehrter Weise möglich, die äußere Wandung der Formeinsätze 5 mit einem Schwalbenschwanz 22 zu versehen und die Nut 21 in die Wandung des Durchbruches 20 einzuarbeiten. Beim Nachschleifen der Schnittkanten 6 verringert sich die Einbauhöhe für die Formeinsätze 5, die dadurch ausgeglichen wird, dass eine zwischen dem Boden jedes Formeinsatzes 5 und der Grundplatte 9 eingesetzte Distanzscheibe 24 um dasselbe Maß nachgeschliffen wird. Die Funktion der Verrastungselemente 23 wird hierdurch nicht beeinflußt, die wirksame Verrastungshöhe verringert sich lediglich um dieses Nachschleifmaß.

## Patentansprüche

1. Formwerkzeug zum Herstellen von Behältern aus einer erwärmten thermoplastischen Kunststofffolie durch Tiefziehen, bestehend aus einem Oberteil mit einer Druckluftzuführung und einer Matrize sowie mit einem Unterteil mit einem Schnittblock und eingesetzten Formeinsätzen entsprechend der Gestalt der herzustellenden Behälter, mit einer Verrastung zwischen Formeinsatz und Schnittblock zur Aufnahme radialer, auf den Formeinsatz einwirkender Kräfte und einer zwischen Außenwand Formeinsatz und Durchbruch im Schnittblock vorgesehenen Kühlkammer, **dadurch gekennzeichnet, dass** die Verrastung (23) zwischen der Schnittkante (6) des Schnittblockes (8) und der Kühlkammer (10) angeordnet ist.

2. Formwerkzeug nach Anspruch 1 **dadurch gekennzeichnet, dass** zur Bildung der Verrastung (23) an der Innenwand des Durchbruches (20) Schwalbenschwänze (22) vorgesehen sind, an den Formeinsätzen (5) entsprechend gestaltete Nuten (21) oder umgekehrt.

## Claims

1. Mould tool for producing containers from a heated thermoplastic synthetic material film by deep-drawing, consisting of an upper part with a compressed air feed and a die as well as with a lower part with a cutting block and inserted mould inserts corresponding with the shape of the containers to be produced, with a detent connection between mould insert and cutting block for acceptance of forces acting radially on the mould insert and a cooling chamber provided between the outer wall of the mould insert and the opening in the cutting block, **characterised in that** the detenting (23) is arranged between the cutting edge (6) of the cutting block (8) and the cooling chamber (10).

2. Mould tool according to claim 1, **characterised in that** dovetail guides (22) are provided at the inner wall of the opening (20) and correspondingly shaped grooves (21) at the mould inserts (5), or conversely, for formation of the detent connection (23).

## Revendications

1. Outil de moulage pour la fabrication de récipients à partir d'un film de matière thermoplastique chauffée, par étirage profond, l'outil se composant d'une partie supérieure avec une alimentation en air comprimé et d'une matrice ainsi que d'une partie inférieure avec un bloc de coupe et des garnitures de moule placées dans celle-ci, correspondant à la forme du récipient à fabriquer, un moyen d'accrochage entre la garniture de moule et le bloc de coupe pour recevoir les efforts agissant radialement sur la garniture de moule ainsi qu'une chambre de refroidissement entre la paroi extérieure de l'insert de moule et un passage dans le bloc de coupe,
**caractérisé en ce que**
l'accrochage (23) est prévu entre l'arête de coupe (6) du bloc de coupe (8) et la chambre de refroidissement (10).

2. Outil de moulage selon la revendication 1,
**caractérisé en ce que**
le moyen d'accrochage (23) est constitué par des queues d'aronde (22) réalisées sur la paroi intérieure du passage (20) et des rainures de forme correspondante (21) sur les inserts de moule (5) ou inversement.
